# EUROPEAN PATENT APPLICATION

(11) **EP 2 495 031 A2**
(43) Date of publication of application: **05.09.2012**
(21) Application number: 10827097.6
(22) Date of filing: 28.10.2010
(51) Int. Cl.: B01D 53/56, B01D 53/34, B01D 53/78, B01D 53/86

(54) **EXHAUST GAS NITROGEN-REMOVAL SYSTEM HAVING A REDUCING-AGENT-MIXING AND NOISE-ATTENUATING STRUCTURE**

(30) Priority: 29.10.2009 KR 20090103772
(71) Applicant: Panasia Co., Ltd., Busan 464-050 (KR); Korea Power Engineering Company, Inc., Yongin-si, Gyeonggi-do 446-509 (KR)
(72) Inventor: LEE, Soo-Tae, Busan 608-092 (KR); CHOI, Won-Suk, Busan 616-735 (KR); HONG, Sung-Ho, Seoul 137-773 (KR)
(74) Representative: Klunker . Schmitt-Nilson . Hirsch
(86) International application number: PCT/KR2010/007472
(87) International publication number: WO 2011/053013

(57) **Abstract**

Disclosed is an exhaust gas nitrogen-removal system having a reducing-agent-mixing and noise-attenuating structure, including a reaction chamber in which a chemical reaction occurs wherein aqueous urea is mixed with an exhaust gas and converted to ammonia, and a reactor in which a chemical reaction occurs wherein nitrogen oxides in the mixed gas supplied from the reaction chamber are converted to nitrogen through denitrification with a catalyst, wherein the reaction chamber includes a multi-mixer which enables a reducing agent and the exhaust gas to be mixed in a short period of time, and the reactor includes a catalyst filter unit in which lateral partitions of a plurality of through-holes which are coated with a catalyst and allow the mixed gas to pass therethrough are formed in a wave shape, so that the reducing agent and the exhaust gas can be mixed in a shorter period of time, thus reducing the length of the reaction chamber, and ensuring a large space for the through-holes while maintaining the contact area between the mixed gas and the catalyst, thereby minimizing differential pressure and increasing noise-attenuation effects.

## Description

### Technical Field

The present invention relates to an exhaust gas denitrification system, and, more particularly, to an exhaust gas nitrogen-removal system having a reducing-agent-mixing and noise-attenuating structure, comprising a reaction chamber in which a chemical reaction takes place wherein aqueous urea is mixed with an exhaust gas to thus be converted into ammonia, and a reactor in which a chemical reaction takes place wherein nitrogen oxides contained in the mixed gas supplied from the reaction chamber are converted into nitrogen through denitrification with a catalyst, wherein the reaction chamber includes a multi-mixer which enables a reducing agent and an exhaust gas to be mixed in a short period of time, and the reactor includes a catalyst filter unit in which lateral partitions of a plurality of through-holes which are coated with a catalyst and allow the mixed gas to pass therethrough are formed in a wave shape, so that the reducing agent and the exhaust gas may be mixed in a shorter period of time, and the length of the reaction chamber may be reduced, and a large space may be ensured for the through-holes while maintaining the contact area between the mixed gas and the catalyst, thereby minimizing differential pressure and increasing noise-attenuation effects.

### Background Art

Exhaust gases, which are discharged by way of procedures performed to generate a heat source and power by combusting fossil fuels, inevitably contain nitrogen oxides (NOx) which have been proven to cause optical smog, acid rain, and respiratory diseases. In order to cope with emission regulations pertaining to such NOx components, SCR (Selective Catalytic Reduction) using ammonia as a reducing agent has recently been employed in various ways.

Conventional exhaust gas denitrification systems for denitrifying NOx from exhaust gases are configured such that dissolved aqueous urea in a storage tank is sprayed into a reaction chamber, and the aqueous urea thus sprayed is then converted into ammonia in the reaction chamber, and NOx components are denitrified using a catalyst in a reactor thus attaining optimal denitrification efficiency and effectively preventing environmental contamination due to NOx components or ammonia.

However, the conventional exhaust gas denitrification systems are problematic because there has to be a guarantee that the time and length are sufficient for mixing aqueous urea with the exhaust gas in the reaction chamber in order to convert aqueous urea into ammonia, and thus the length of the reaction chamber may be unavoidably increased, undesirably enlarging the equipment of the entire system.

Furthermore, the conventional exhaust gas denitrification systems are problematic because through-holes of a catalyst filter unit which is provided in the reactor are in a honeycomb type of formation, and thus the catalyst filter unit is formed to have a large width and a short length in order to minimize the pressure drop caused while passing the mixed gas comprising the reducing agent and the exhaust gas through the catalyst filter unit, undesirably requiring a large equipment space and generating a large amount of noise.

### Disclosure

### Technical Problem

Accordingly, the present invention has been made keeping in mind the above problems occurring in the related art, and an object of the present invention is to provide an exhaust gas nitrogen-removal system having a reducing-agent-mixing and noise-attenuating structure, which may solve problems of a mixing space, namely, the length of a reaction chamber being increased to ensure sufficient time and length to mix a finely sprayed reducing agent with an exhaust gas in a conventional exhaust gas denitrification system, and which enables the reducing agent and the exhaust gas to be mixed in a short period of time thus reducing the length of the reaction chamber, thereby efficiently utilizing the equipment area of the entire denitrification system.

Another object of the present invention is to provide an exhaust gas nitrogen-removal system having a reducing-agent-mixing and noise-attenuating structure, which includes first mixers and second mixers wherein upward flow guide plates which are inclined upwards and downward flow guide plates which are inclined downwards are arranged in alternation, thus forming vortices so that a mixed gas comprising a reducing agent and an exhaust gas is mixed well.

Still another object of the present invention is to provide an exhaust gas nitrogen-removal system having a reducing-agent-mixing and noise-attenuating structure, which includes a first mixer module and a second mixer module each comprising first mixers and second mixers formed adjacent to each other, wherein flow guide plates of the first and second mixers of the first and second mixer modules are configured such that the flow guide plates of the first mixer and the flow guide plates of the second mixer, which are positioned to face each other, are inclined in opposite directions, thus forming large vortices so that a mixed gas comprising a reducing agent and an exhaust gas is mixed well.

Yet another object of the present invention is to provide an exhaust gas nitrogen-removal system having a reducing-agent-mixing and noise-attenuating structure, wherein a plurality of hollows is formed in the center of the flow guide plates to form laminar flows in a linear direction via the hollows, so that the laminar flows are combined with vortices which flow in a curve direction via the flow guide plates thus increasing the mixing efficiency of the reducing agent and the exhaust gas.

A further object of the present invention is to provide an exhaust gas nitrogen-removal system having a reducing-agent-mixing and noise-attenuating structure, wherein a catalyst filter unit is formed such that lateral partitions of through-holes thereof are provided in wave-shaped corrugate form instead of a conventional honeycomb type catalyst filter unit, thus ensuring a large space for the through-holes while maintaining the contact area between the mixed gas and the catalyst, thereby minimizing differential pressure and increasing noise-attenuation effects.

### Technical Solution

In order to accomplish the above objects, an exhaust gas nitrogen-removal system having a reducing-agent-mixing and noise-attenuating structure according to the present invention has the following configurations.

According to an embodiment of the present invention, an exhaust gas nitrogen-removal system having a reducing-agent-mixing and noise-attenuating structure comprises a reaction chamber in which a chemical reaction takes place wherein aqueous urea is mixed with an exhaust gas to thus be converted into ammonia, and a reactor in which a chemical reaction takes place wherein a nitrogen oxide contained in a mixed gas supplied from the reaction chamber is converted into nitrogen through denitrification with a catalyst, wherein the reaction chamber comprises a multi-mixer which enables a reducing agent and an exhaust gas to be mixed in a short period of time, and the reactor comprises a catalyst filter unit having a plurality of through-holes which are coated with a catalyst and allow the mixed gas to pass therethrough.

According to another embodiment of the present invention, the multi-mixer may comprise first mixers and second mixers each having a plurality of flow guide plates, and the plurality of flow guide plates has an alternating arrangement of upward flow guide plates which are inclined upwards and downward flow guide plates which are inclined downward.

According to still another embodiment of the present invention, the multi-mixer may comprise a first mixer module and a second mixer module each comprising the first mixers and the second mixers which are formed adjacent to each other, and the flow guide plates of the first mixers and the second mixers of the first mixer module and the second mixer module are configured such that the flow guide plates of the first mixers and the flow guide plates of the second mixers, which are positioned to face each other, are inclined in opposite directions.

According to still another embodiment of the present invention, the flow guide plates may have a plurality of hollows so as to form laminar flows in a linear direction via the hollows, so that the laminar flows are combined with vortices which flow in a curve direction via the flow guide plates to increase mixing efficiency of the reducing agent and the exhaust gas.

According to still another embodiment of the present invention, the catalyst filter unit may be configured such that lateral partitions which define the through-holes are formed in a wave shape, thus ensuring a large space for the through-holes while maintaining a contact area between the mixed gas and the catalyst, thereby minimizing differential pressure and increasing noise-attenuation effects.

### Advantageous Effects

The present invention can obtain the following effects based on the above embodiments and the configurations, combinations and relations which will be described later.

The present invention provides an exhaust gas nitrogen-removal system having a reducing-agent-mixing and noise-attenuating structure, which can solve problems of a mixing space, namely, the length of reaction chamber being increased to ensure sufficient time and length to mix a finely sprayed reducing agent with an exhaust gas in a conventional exhaust gas denitrification system, and which enables the reducing agent and the exhaust gas to be mixed in a short period of time thus reducing the length of the reaction chamber, thereby efficiently utilizing the equipment area of the entire denitrification system.

The present invention provides an exhaust gas nitrogen-removal system having a reducing-agent-mixing and noise-attenuating structure, which includes first mixers and second mixers wherein upward flow guide plates which are inclined upwards and downward flow guide plates which are inclined downwards are arranged in alternation, thus forming vortices so that a mixed gas comprising a reducing agent and an exhaust gas is mixed well.

The present invention provides an exhaust gas nitrogen-removal system having a reducing-agent-mixing and noise-attenuating structure, which includes a first mixer module and a second mixer module each comprising first mixers and second mixers formed adjacent to each other, wherein flow guide plates of the first and second mixers of the first and second mixer modules are configured such that the flow guide plates of the first mixer and the flow guide plates of the second mixer, which are positioned to face each other, are inclined in opposite directions, thus forming large vortices so that a mixed gas comprising a reducing agent and an exhaust gas is mixed well.

The present invention provides an exhaust gas nitrogen-removal system having a reducing-agent-mixing and noise-attenuating structure, wherein a plurality of hollows is formed in the center of the flow guide plates to form laminar flows in a linear direction via the hollows, so that the laminar flows are combined with vortices which flow in a curve direction via the flow guide plates thus increasing the mixing efficiency of the reducing agent and the exhaust gas.

The present invention provides an exhaust gas nitrogen-removal system having a reducing-agent-mixing and noise-attenuating structure, wherein a catalyst filter unit is formed such that lateral partitions of through-holes thereof are provided in wave-shaped corrugate form instead of a conventional honeycomb type catalyst filter unit, thus ensuring a large space for the through-holes while maintaining the contact area between the mixed gas and the catalyst, thereby minimizing differential pressure and increasing noise-attenuation effects.

### Description of Drawings

FIG. 1 is a block diagram of an exhaust gas denitrification system;
FIG. 2 is a view showing the configuration of the exhaust gas denitrification system;
FIG. 3 is of perspective views showing the first and second mixers used in an exhaust gas nitrogen-removal system having a reducing-agent-mixing and noise-attenuating structure according to an embodiment of the present invention;
FIG. 4 is a view showing the multi-mixer used in the exhaust gas nitrogen-removal system having a reducing-agent-mixing and noise-attenuating structure according to an embodiment of the present invention;
FIG. 5 is a view showing the multi-mixer used in an exhaust gas nitrogen-removal system having a reducing-agent-mixing and noise-attenuating structure according to another embodiment of the present invention;
FIG. 6 is a view showing the multi-mixer used in an exhaust gas nitrogen-removal system having a reducing-agent-mixing and noise-attenuating structure according to a further embodiment of the present invention;
FIG. 7 is of perspective views showing the catalyst filter unit used in the exhaust gas nitrogen-removal system having a reducing-agent-mixing and noise-attenuating structure according to an embodiment of the present invention; and
FIG. 8 is of partial cross-sectional views showing the catalyst filter unit used in the exhaust gas nitrogen-removal system having a reducing-agent-mixing and noise-attenuating structure according to an embodiment of the present invention.

### <Description of the Reference Numerals in the Drawings>

| | | | |
|---|---|---|---|
| 1: | discharge unit | 2: | output sensor |
| 3: | aqueous urea supply unit | 4: | spray unit |
| 5: | reaction chamber | 6: | reactor |
| 7: | heat exchanger | 8: | control unit |
| 9: | stack | 10: | multi-mixer |
| 20: | catalyst filter unit | 110: | first mixer |
| 120: | second mixer | 130: | flow guide plate |
| 131: | upward flow guide plate | | |
| 132: | downward flow guide plate | 133: | hollow |
| 140: | first mixer module | 150: | second mixer module |
| 210: | through-hole | 220: | lateral partition |
| 230: | upper/lower partition | | |
| 71: | inflow path | 72: | outflow path |
| a: | vortex | b: | laminar flow |
| L: | length | W: | width |

### Mode for Invention

Hereinafter, preferred embodiments of an exhaust gas nitrogen-removal system having a reducing-agent-mixing and noise-attenuating structure will be described in detail with reference to the accompanying drawings.

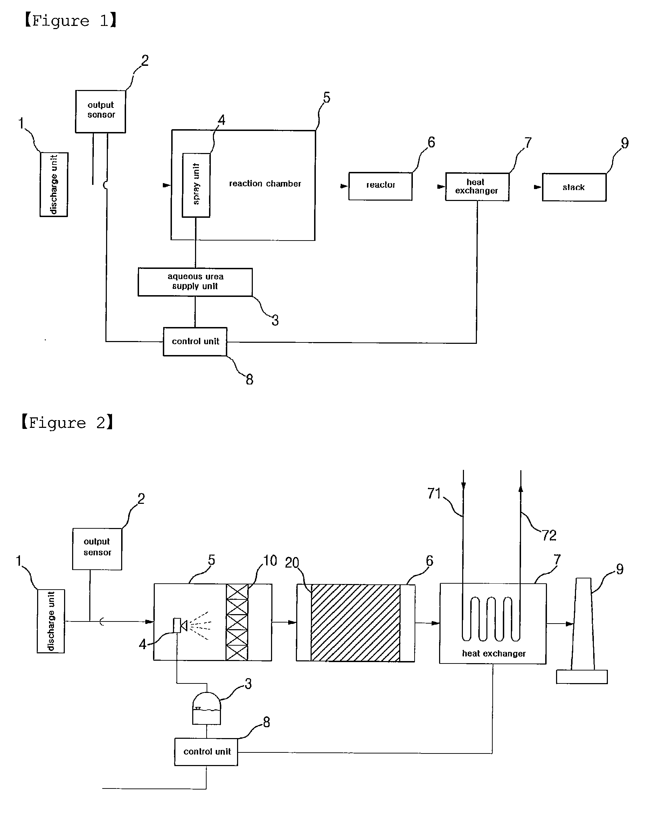

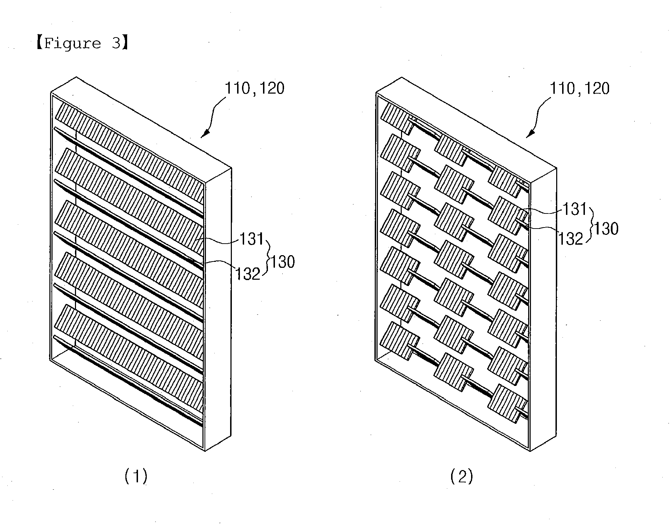

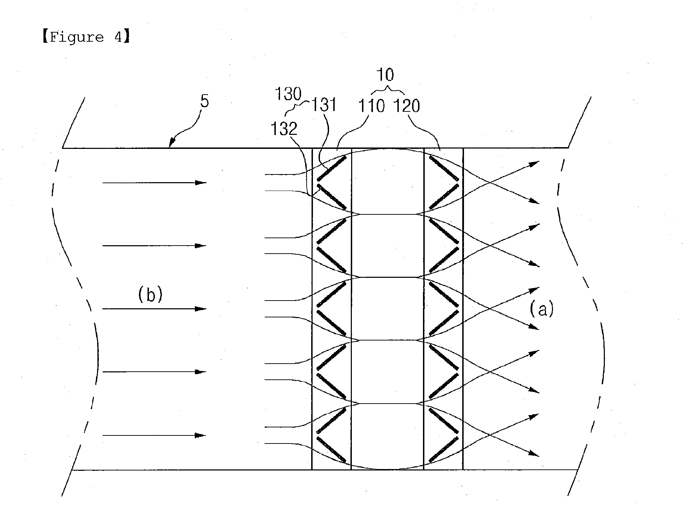

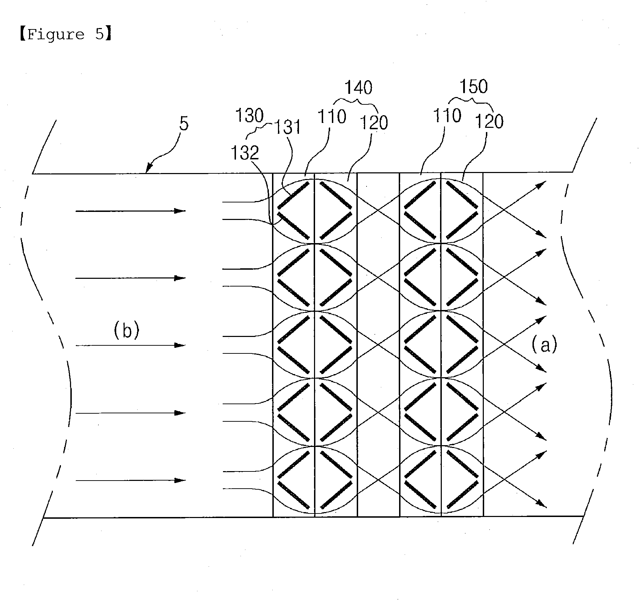

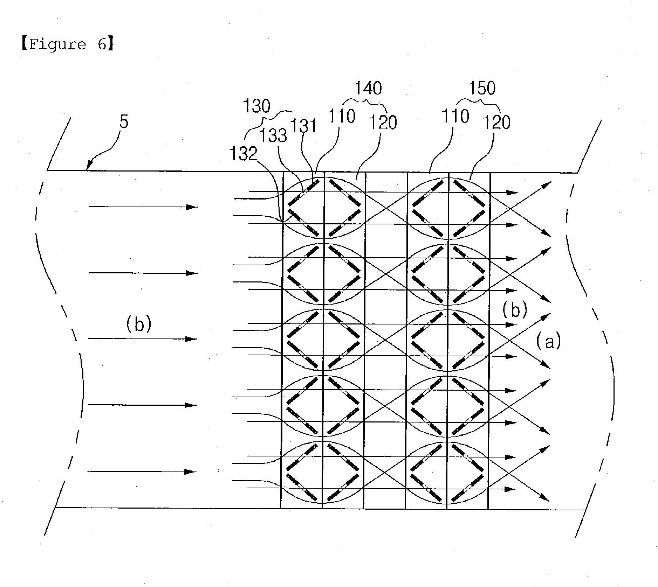

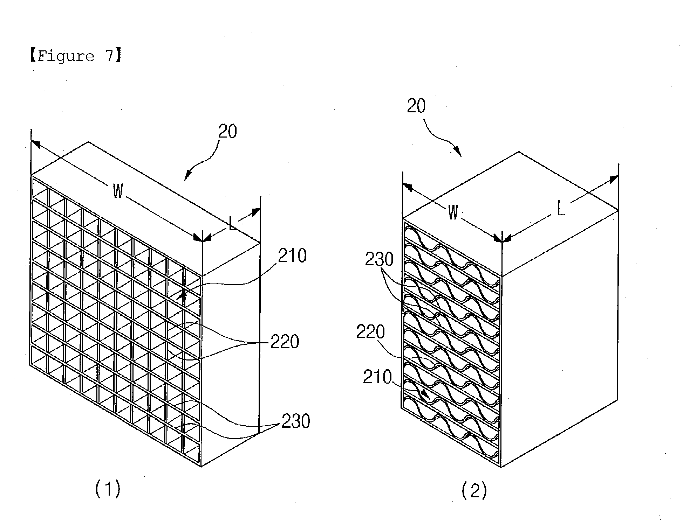

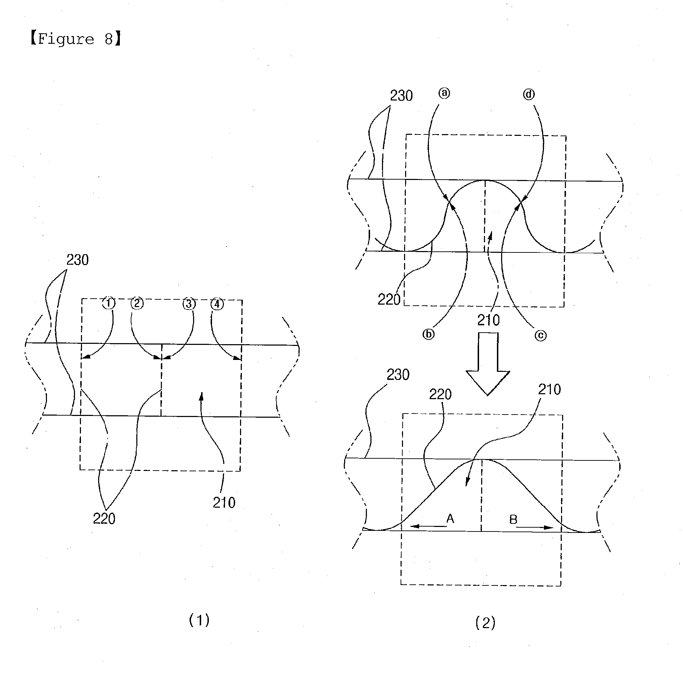

FIG. 1 is a block diagram of an exhaust gas denitrification system, FIG. 2 is a view showing the configuration of the exhaust gas denitrification system, FIG. 3 is of perspective views showing the first and second mixers used in an exhaust gas nitrogen-removal system having a reducing-agent-mixing and noise-attenuating structure according to an embodiment of the present invention, FIG. 4 is a view showing the multi-mixer used in the exhaust gas nitrogen-removal system having a reducing-agent-mixing and noise-attenuating structure according to an embodiment of the present invention, FIG. 5 is a view showing the multi-mixer used in an exhaust gas nitrogen-removal system having a reducing-agent-mixing and noise-attenuating structure according to another embodiment of the present invention, FIG. 6 is a view showing the multi-mixer used in an exhaust gas nitrogen-removal system having a reducing-agent-mixing and noise-attenuating structure according to a further embodiment of the present invention, FIG. 7 is of perspective views showing the catalyst filter unit used in the exhaust gas nitrogen-removal system having a reducing-agent-mixing and noise-attenuating structure according to an embodiment of the present invention, and FIG. 8 is of partial cross-sectional views showing the catalyst filter unit used in the exhaust gas nitrogen-removal system having a reducing-agent-mixing and noise-attenuating structure according to an embodiment of the present invention.

With reference to FIGS. 1 and 2, the exhaust gas nitrogen-removal system is described below. The high-temperature exhaust gas nitrogen-removal system comprises an output sensor 2, an aqueous urea supply unit 3, a spray unit 4, a reaction chamber 5, and a reactor 6, which are provided between a discharge unit 1 for discharging a high-temperature exhaust gas and a heat exchanger 7.

The discharge unit 1 may include an engine for thermal power plants or a LNG gas discharge unit for small and medium-sized cogeneration power plants which discharge a gas or fluid which needs to be denitrified, and also a variety of gas generators which discharge a gas or fluid including nitrogen oxides may be utilized.

The output sensor 2 senses information about the load of the discharge unit 1 which is an exhaust gas generator and transmits such information to a control unit 8 which will be described later. Because the amount of nitrogen oxides contained in the discharged gas or fluid is determined depending on the load of the discharge unit 1, information including RPM, current, outlet temperature, etc., from which the load of the discharge unit 1 may be checked, is transmitted to the control unit 8, and thus the amount of supplied aqueous urea is controlled by the control unit 8 so that this amount is suitable for denitrifying nitrogen oxides contained in the discharged gas from the reaction chamber 5. Accordingly, the amount of nitrogen oxides in the exhaust gas may be determined by the output sensor 2, thus obviating the need for an analyzer for analyzing nitrogen oxides and ammonia, making it possible to construct competitive equipment.

The aqueous urea supply unit 3 is used to supply aqueous urea to the reaction chamber 5, and includes a storage tank, a flow rate meter, a flow rate control pump, etc. The storage tank stores aqueous urea, and need not be a high-pressure gas vessel as in an ammonia storage tank, and one side thereof is connected to the flow rate meter. Typically, the storage tank may be formed in a variety of shapes, such as a cylindrical shape, a rectangular parallelepiped shape, etc., and may also be formed in a variety of sizes and capacities using various materials such as SUS304 or SPV300. One side of the flow rate meter is connected to the outlet of the storage tank and the other side thereof is connected to the flow rate control pump; the flow rate meter is used to measure the flow rate of aqueous urea supplied from the storage tank. The flow rate meter may include currently commercially available products, for example, FM4-8N3CFA3G having a flow rate of 5.7 ~ 85 liter/min and being of a turbine type available from Daelim Integrated Instruments. One side of the flow rate control pump is connected to the flow rate meter to receive aqueous urea, so that the amount of aqueous urea supplied to the spray unit 4 is adjusted in response to a signal of the control unit 8. For example, there is exemplified YAD-12211(1/2") having a flow rate of 5.7 ~ 85 liter/min and made of SCS13 (Body) and SUS316 (TRIM), available from Daelim Integrated Instruments.

The spray unit 4 is connected to the outlet of the flow rate control pump of the aqueous urea supply unit 3, and includes a spray nozzle to spray aqueous urea into the reaction chamber 5. The spray nozzle sprays aqueous urea into the reaction chamber 5 from the aqueous urea supply unit 3, and may include for example a wide-angle round spray (setup No: 26) having a spraying rate of 33 liter/hr and made of SUS304 available from Spraying Systems Co., Korea.

The reaction chamber 5 is used to mix the exhaust gas discharged from the discharge unit 1 with aqueous urea sprayed by way of the spray unit 4 so that aqueous urea is converted into ammonia to produce a mixed gas comprising ammonia and the exhaust gas. Specifically, aqueous urea sprayed by the spray unit 4 is mixed with the exhaust gas at high temperature and is thus converted into ammonia according to the following chemical reaction in the presence of heat (an appropriate temperature thereof is 250 ~ 400°C) fed from the exhaust gas. The mixed gas comprising ammonia and the exhaust gas is supplied to the reactor 6.

xH₂O + 2CO(NH₂)₂ + O₂ → 2NH₃ + CO₂ + (x-1)H₂O

As such, the reaction chamber 5 may be provided with a static mixer or the like for mixing aqueous urea sprayed by the spray unit 4 with the exhaust gas. Such a conventional static mixer essentially requires a space that is of at least a predetermined length and provides at least enough time for the aqueous urea or ammonia, namely, a reducing agent, to uniformly mix with the exhaust gas. Accordingly, the size of the reaction chamber 5 must necessarily be increased undesirably causing problems in terms of optimizing the equipment space. To solve this problem, a multi-mixer is used in the present invention and will be described later.

The reactor 6 includes a catalyst therein which denitrifies nitrogen oxides (NOx) of the mixed gas comprising ammonia and the exhaust gas, which are fed via the inlet thereof, into a harmless component, and SCR products available from SK are useful. Specifically, nitrogen oxides (NOx) of the mixed gas comprising ammonia and the exhaust gas fed via the inlet of the reactor are converted into a harmless component according to the following chemical reaction in the presence of a catalyst at an appropriate temperature of 250 ~ 400°C, and the component thus converted is discharged from a stack 9 via the heat exchanger 7.

4NO + 4NH₃ + O₂ → 4N₂ + 6H₂O

2NO₂ + 4NH₃ + O₂ → 3N₂ + 6H₂O

As such, the catalyst may include a variety of products, for example products using oxides of V, Mo, W, Cu, Ni, Fe, Cr, Mn, Sn, etc., sulfates, rare earth metal oxides, precious metals and so on as a catalytic active species and Al₂O₃, TiO₂, activated carbon, zeolite, silica and the like as a catalyst support. Currently available are V₂O₅ (vanadium pentoxide), MoO₃ (molybdenum trioxide), and WO₃ (tungsten trioxide), each of which includes TiO₂ (titanium oxide) as a support. A catalyst using Al₂O₃ as a support may function to produce sulfates with respect to SOx-containing exhaust gases such as exhaust gases of coal and heavy oil fuel, thus decreasing a specific surface area undesirably causing deterioration, and thereby this catalyst may be applied only to exhaust gases without SOx.

The heat exchanger 7 is used to recover heat emitted after primarily producing power using self power generation facilities without relying on boiler operation and external power companies in order to supply electricity or heat energy necessary for industrial plants, buildings, etc., and includes an inflow path 71 for supplying cooling water to the heat exchanger 7 and an outflow path 72 for discharging cooling water subjected to heat exchange.

The control unit 8 is configured to control the entire exhaust gas nitrogen-removal system according to the present invention, and performs the functions of controlling/adjusting the entire system, including determining whether an appropriate amount of aqueous urea is supplied for a given amount of NOx contained in the exhaust gas in response to the load sensed by the output sensor 2, adjusting the amount of aqueous urea supplied from the aqueous urea supply unit 3, etc.

With reference to FIGS. 3 to 6, the configurations and functions of the multi-mixer 10 used in the exhaust gas nitrogen-removal system having a reducing-agent-mixing and noise-attenuating structure according to an embodiment of the present invention are described in detail below.

The exhaust gas nitrogen-removal system having a reducing-agent-mixing and noise-attenuating structure according to the embodiment of the present invention includes the reaction chamber 5 which is provided with the multi-mixer 10 which enables the reducing agent and the exhaust gas to be mixed in a short period of time. The multi-mixer 10 includes first mixers 110 and second mixers 120 each having a plurality of flow guide plates 130, and the plurality of flow guide plates 130 has an arrangement in which the upward flow guide plates 131 which are inclined upwards and downward flow guide plates 132 which are inclined downwards are arranged in alternation.

The multi-mixer 10 is configured such that the reducing agent comprising aqueous urea or aqueous urea-converted ammonia discharged from the spray unit 4 is uniformly mixed with the exhaust gas so that a conversion reaction from aqueous urea into ammonia is carried out in a short period of time and a uniformly mixed gas is produced, and may include the first mixers 110 and the second mixers 120 as mentioned above.

The first mixers 110 and the second mixers 120 are arranged in parallel back and forth in the reaction chamber 5 to form vortices a so that the reducing agent and the exhaust gas are uniformly mixed in a short period of time. As illustrated in FIGS. 3 and 4, the first mixers 110 include the plurality of flow guide plates 130 in an outer frame which forms a contour.

The flow guide plates 130 are configured such that vortices a are formed in the flow of the mixed gas or fluid comprising the reducing agent and the exhaust gas so that the reducing agent and the exhaust gas are uniformly mixed in a short period of time, and upward flow guide plates 131 which are inclined upwards and downward flow guide plates 132 which are inclined downwards are arranged in alternation.

As illustrated in FIGS. 3 and 4, the upward flow guide plates 131 are plate type members which are inclined right upwards at about 45°, whereby the flow of the mixed gas or fluid comprising the reducing agent and the exhaust gas is guided right upwards thus forming vortices a.

Also as illustrated in FIGS. 3 and 4, the downward flow guide plates 132 are plate type members which are inclined right downwards at about 45°, whereby the flow of the mixed gas or fluid comprising the reducing agent and the exhaust gas is guided right downwards thus forming vortices a, and are preferably arranged in alternation with the upward flow guide plates 131.

The configuration of the second mixers 120 is the same as the configuration of the first mixers, and they 120 are arranged back and forth along with the first mixers to form multiple vortices a in the flow of the mixed gas or fluid comprising the reducing agent and the exhaust gas thus achieving uniform mixing in a shorter period of time. The upward flow guide plates 131 and the downward flow guide plates 132 of the second mixers 120 also have the same configurations as do the upward flow guide plates 131 and the downward flow guide plates 132 of the first mixers 110. Preferably, as illustrated in FIG. 4, when the upward flow guide plates 131 and the downward flow guide plates 132 of the second mixers 120, which are positioned to face the upward flow guide plates 131 and the downward flow guide plates 132 of the first mixers 110, are inclined in the direction opposite to the direction of the first mixers 110, vortices a may be more effectively formed.

According to another embodiment of the present invention, the multi-mixer 10 includes a first mixer module 140 and a second mixer module 150 in which the first mixers 110 and the second mixers 120 are formed adjacent to each other. The flow guide plates 130 of the first mixers and the second mixers which constitute the first mixer module 140 and the second mixer module 150 are configured such that the flow guide plates 130 of the first mixers 110 and the flow guide plates 130 of the second mixers 120, which are positioned to face each other, are inclined in opposite directions.

As illustrated in FIG. 5, the first mixer module 140 includes the first mixers 110 and the second mixers 120, which are formed adjacent to each other. As such, the flow guide plates 130 of the first mixers 110 and the second mixers 120 which are formed adjacent to each other are preferably configured such that the flow guide plates which are positioned to face each other are inclined in opposite directions. Specifically, in the case where the first mixers 110 and the second mixers 120 are disposed adjacent to each other back and forth to form the first mixer module 140, the upward flow guide plates 131 of the first mixer 110 and the downward flow guide plates 132 of the second mixer 120 are positioned to face each other, and the downward flow guide plates 132 of the first mixer 110 and the upward flow guide plates 131 of the second mixer 120 are positioned to face each other. Thereby, as illustrated in FIG. 5, the mixed gas or fluid which passes through the first mixer module 140 may more greatly and obviously form the flow of vortices a.

The second mixer module 150 has the same configuration as do the first mixer module 140, and the detailed description thereof is omitted. The second mixer module 150 is spaced apart from the first mixer module 140 back and forth at a predetermined distance, so that the vortices a formed by the first mixer module 140 may more greatly and obviously extend thereby uniformly mixing the mixed gas or fluid in a shorter period of time.

According to a further embodiment of the present invention, the flow guide plates 130 have a plurality of hollows 133 so as to form laminar flows b in a linear direction via the hollows 133. Thereby, the vortices a which flow in a curve direction through the flow guide plates 130 and the laminar flows b are combined together, thus increasing the mixing efficiency of the reducing agent and the exhaust gas.

The hollows 133 are holes which are formed in the center of the flow guide plates 130, particularly, the upward flow guide plates 131 and the downward flow guide plates 132 so as to pass the mixed gas or fluid therethrough. The plurality of hollows 133 may be formed along the longitudinal direction of the upward flow guide plates 131 and the downward flow guide plates 132. When the hollows 133 are formed in this way, as illustrated in FIG. 6, part of the mixed gas or fluid which collides with the flow guide plates 130 may form the laminar flows b in the linear direction through the hollows 133. The laminar flows b are formed to intersect the vortices a formed by the flow guide plates 130, thereby increasing the mixing efficiency of the reducing agent and the exhaust gas.

The exhaust gas nitrogen-removal system having a reducing-agent-mixing and noise-attenuating structure comprising the reaction chamber 5 including the multi-mixer 10 according to the present invention, enables the reducing agent and the exhaust gas to be uniformly mixed in a shorter period of time by the action of the multi-mixer 10, thus reducing the length of the reaction chamber 5 to thereby effectively utilize the equipment space, so that the entire system may be efficiently installed and operated.

Below is a description of the detailed configuration and function of the catalyst filter unit 20 used in the exhaust gas nitrogen-removal system having a reducing-agent-mixing and noise-attenuating structure according to the embodiment of the present invention with reference to FIGS. 7 and 8.

The reactor 6 of the exhaust gas nitrogen-removal system having a reducing-agent-mixing and noise-attenuating structure according to the embodiment of the present invention includes the catalyst filter unit 20 wherein a plurality of through-holes 210 is coated with a catalyst and allows the mixed gas to pass therethrough. Also, the catalyst filter unit 20 is configured such that lateral partitions 220 which define the through-holes 210 are formed in a wave shape, whereby a large space is ensured for the through-holes 210 while maintaining the contact area between the mixed gas and the catalyst, thus minimizing differential pressure and increasing noise-attenuation effects.

The catalyst filter unit 20 causes the mixed gas or fluid comprising the reducing agent and the exhaust gas fed into the reactor 6 to react while coming into contact with the catalyst in the reactor 6, thus producing a harmless component. As illustrated in FIG. 7(1), a conventional catalyst filter unit has a honeycombed structure in which a plurality of through holes having a rectangular cross-section is formed. In this case, there may occur a pressure drop phenomenon where the pressure of the mixed gas or fluid passed through the catalyst filter unit decreases. To minimize such a phenomenon, a structure where the width W of the catalyst filter unit is increased instead of reducing the length L thereof is adopted. The case where the length L of the catalyst filter unit is decreased may be problematic because the length at which the mixed gas or fluid comes into contact with the catalyst applied or extruded on the catalyst filter unit may also decrease and thus noise-attenuation effects may be halved, undesirably generating a large amount of noise or requiring an additional muffler. With the aim of solving this problem, as illustrated in FIG. 7(2), the catalyst filter unit 20 used in the present invention is configured such that the lateral partitions 220 among parts which define the through-holes 210 are formed in a wave shape and thus the cross-sectional area of the through-holes 210 may be increased while maintaining the same contact area, thereby further increasing the length L of the catalyst filter unit 20. The detailed description thereof is given later.

The through-holes 210 are partitioned by upper and lower partitions 230 and lateral partitions 220 in the catalyst filter unit 20, so that the mixed gas or fluid comprising the reducing agent and the exhaust gas pass therethrough. Because the catalyst is applied or extruded on the surface of the through-holes 210 as mentioned above, the mixed gas or fluid may come into contact with the catalyst while passing through the through-holes 210.

The lateral partitions 220 are used to define the through-holes 210 together with the upper and lower partitions 230. Although the through-holes of the conventional catalyst filter unit are of a honeycomb type wherein lateral partitions are perpendicularly formed, the lateral partitions 220 of the present invention are formed in a wave shape to define the through-holes 210. The different effects thereby are described below.

The effects of the structure of the catalyst filter unit 20 used in this invention are specified below.

With reference to FIGS. 7 and 8, as mentioned above, because the catalyst filter unit 20 of the present invention is configured such that the lateral partitions 220 are formed in a wave shape to define the through-holes 210, and thus the same contact area may be ensured and the cross-sectional area of the through-holes 210 may be enlarged. More specifically, as illustrated in FIG. 8(1), the contact area of conventional honeycomb type through-holes when viewed in cross-section, which may come into contact with the mixed gas or fluid, is equal to the sum of the lengths of the upper and lower partitions 230 and the lateral partitions 220. As such, the lengths of the upper and lower partitions 230 are the same as those of the catalyst filter unit 20 of the present invention and are thus excluded, and only the lengths of the lateral partitions 220 are taken into consideration, so that the contact area amounts to the sum of the lengths of '①+②+③+④'. However, as illustrated in the upper part of FIG. 8(2), the contact area of the wave-shaped through-holes 210 of the present invention when viewed in cross-section, which may come into contact with the mixed gas or fluid, is equal to the sum of the lengths of the upper and lower partitions 230 and the lateral partitions 220. As such, the lengths of the upper and lower partitions 230 are the same as those of the conventional honeycomb type catalyst filter unit 20 and are thus excluded, and only the lengths of the lateral partitions 220 are taken into consideration, so that the contact area amounts to the sum of the lengths of 'ⓐ+ⓑ+ⓒ+ⓓ'. Accordingly, the contact area of the through-holes 210 of the catalyst filter unit 20 according to the present invention can be seen to be greater. Hence, in the catalyst filter unit 20 of the present invention as illustrated in the lower part of FIG. 8(2), even when the lateral partitions 220 are moved in the direction of A and B to enlarge the cross-sectional area of the through-holes 210, the contact area remains the same as that of the conventional honeycomb type catalyst filter unit 20. Thus, in the catalyst filter unit 20 of the present invention, the pressure drop of the mixed gas or fluid which passes through the through-holes 210 is decreased in proportion to the increase in the cross-sectional area of the through-holes 210. Hence, even when the length L of the catalyst filter unit 20 is increased, pressure drop may be minimized. Furthermore, as the length L of the catalyst filter unit 20 increases, the contact between the mixed gas or fluid and the catalyst applied onto the catalyst filter unit 20 may be increased. Accordingly, while the mixed gas or fluid passes through the pores of the coated catalyst, a larger amount of noise may be absorbed, so that noise attenuation and denitrification effects may be doubled in proportion to the increase in length of the catalyst filter unit 20.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. An exhaust gas nitrogen-removal system having a reducing-agent-mixing and noise-attenuating structure, comprising a reaction chamber in which a chemical reaction takes place wherein aqueous urea is mixed with an exhaust gas to thus be converted into ammonia, and a reactor in which a chemical reaction takes place wherein a nitrogen oxide contained in a mixed gas supplied from the reaction chamber is converted into nitrogen through denitrification with a catalyst,
wherein the reaction chamber comprises a multi-mixer which enables a reducing agent and an exhaust gas to be mixed in a short period of time, and
the reactor comprises a catalyst filter unit having a plurality of through-holes which are coated with a catalyst and allow the mixed gas to pass therethrough.

2. The exhaust gas nitrogen-removal system of claim 1, wherein the multi-mixer comprises first mixers and second mixers each having a plurality of flow guide plates, and
the plurality of flow guide plates has an alternating arrangement of upward flow guide plates which are inclined upwards and downward flow guide plates which are inclined downward.

3. The exhaust gas nitrogen-removal system of claim 2, wherein the multi-mixer comprises a first mixer module and a second mixer module each comprising the first mixers and the second mixers which are formed adjacent to each other, and
the flow guide plates of the first mixers and the second mixers of the first mixer module and the second mixer module are configured such that the flow guide plates of the first mixers and the flow guide plates of the second mixers, which are positioned to face each other, are inclined in opposite directions.

4. The exhaust gas nitrogen-removal system of claim 3, wherein the flow guide plates have a plurality of hollows so as to form laminar flows in a linear direction via the hollows, so that the laminar flows are combined with vortices which flow in a curve direction via the flow guide plates to increase mixing efficiency of the reducing agent and the exhaust gas.

5. The exhaust gas nitrogen-removal system of claim 1, wherein the catalyst filter unit is configured such that lateral partitions which define the through-holes are formed in a wave shape, thus ensuring a large space for the through-holes while maintaining a contact area between the mixed gas and the catalyst, thereby minimizing differential pressure and increasing noise-attenuation effects.
